# FASCICULE DE BREVET EUROPEEN

(11) **EP 1 457 410 B1**
(45) Date de publication et mention de la délivrance du brevet: **12.11.2008**
(21) Numéro de dépôt: 04290700.6
(22) Date de dépôt: 15.03.2004
(51) Int. Cl.: B62D 55/14

(54) **Véhicule à chenilles à roues de roulement jumelées**
Raupenfahrzeug mit Zwillingslaufrädern
Crawler vehicle with twin running wheels

(30) Priorité: 13.03.2003 FR 0303093
(43) Date de publication de la demande: 15.09.2004
(73) Titulaire: Coeuret, Bernard, 14310 Epinay sur Odon (FR)
(72) Inventeur: Coeuret, Bernard, 14310 Epinay sur Odon (FR)
(74) Mandataire: Cabinet HERRBURGER

(56) Documents cités:
- DE-A- 2 065 419
- DE-A- 3 843 462
- US-A- 6 129 426
- US-B1- 6 220 378

## Description

### Domaine de l'invention

La présente invention concerne un véhicule à chenilles dont le train de roulement est formé d'un caisson équipé d'un barbotin engrenant avec une piste dentée intérieure de la chenille, et de roues de roulement circulant dans le chemin de roulement du barbotin.

### Arrière plan technologique

Les véhicules à chenilles notamment les véhicules légers du type défini ci-dessus sont destinés à circuler dans des terrains difficiles et en particulier des chantiers encombrés de gravats et d'obstacles avec des arêtes plus ou moins vives. Ces véhicules à chenilles effectuent également des manoeuvres souvent brutales puisqu'ils sont souvent obligés, étant données les conditions de circulation sur les chantiers, de manoeuvrer sur place ce qui sollicite fortement les chenilles en général formées d'une bande continue de caoutchouc.

Le document US 6 129 426 décrit un véhicule à chenilles dont chaque train de roulement est formé par une poutre horizontale 28 portant des galets de roulement et l'ensemble est surmonté d'un barbotin 40. La chenille 82 porte intérieurement des séries de dents 86a, 86b, 86c, 86d délimitant le chemin de roulement du barbotin 40. Le barbotin 40 comporte des séries de bossages ou de dents 50 engrenant avec les dents 86a-86d.

Les roues de roulement 56, 58, 60, 62 circulent sur des pistes intérieures à la chenille et comprises entre les rangées respectives de dents 86a-86b, ou 86b-86c ou 86c-86d. mais ces roues de roulement ne s'appuient pas à l'extérieur du chemin du barbotin, ni à droite ni à gauche des bossages ou dents extérieures 86a, 86d.

Dans ces conditions, la largeur de la chenille 82 est utilisée de manière peu efficace puisque toute la charge du véhicule est appuyée sur le chemin de roulement du barbotin et non pas sur la chenille.

### But de l'invention

La présente invention a pour but de développer un véhicule à chenilles améliorant le roulement et réduisant l'usure des chenilles.

A cet effet l'invention concerne un véhicule à chenilles du type défini ci-dessus caractérisé en ce que le train de roulement est formé au moins partiellement de roues jumelées roulant sur la surface intérieure de la chenille de part et d'autre du chemin de roulement du barbotin et des roues de roulement.

Les roues jumelées permettent une meilleure répartition de l'effort c'est-à-dire de la charge de l'engin sur la chenille en particulier si la chenille s'appuie sur un terrain irrégulier parsemé d'obstacles durs alternant avec des zones molles comme un terrain sablonneux, encombré de gravats ou d'objets contondants.

Cette meilleure répartition de la charge permet également de réduire la pression locale de la chenille sur le sol dans la zone d'appui des roues du train de roulement. Elle protège efficacement la chenille contre l'usure excessive en particulier lorsque la chenille est fortement sollicitée lors des manoeuvres de changement de direction.

Suivant une autre caractéristique avantageuse les roues jumelées sont coaxiales aux roues circulant dans le chemin de roulement du barbotin.

L'installation de roues jumelées sur l'axe des roues centrales de roulement simplifie la réalisation mécanique du train de roulement.

Suivant une autre caractéristique les roues jumelées sont montées de manière décalée par rapport aux roues circulant dans le chemin de roulement du barbotin, sur le caisson. Ce décalage des roues jumelées par rapport aux roues centrales améliore encore la répartition des efforts et la régularité de cette répartition sur une surface importante des chenilles, réduisant d'autant les pressions locales de la chenille sur le sol en les uniformisant.

Suivant une autre caractéristique avantageuse les roues jumelées ont un diamètre nettement plus grand que celui des roues centrales. L'augmentation du rayon des roues jumelées par rapport à celle des roues centrales, possible du fait que les roues jumelées ne sont pas limitées par leur encombrement à l'intérieur du caisson de support puisqu'elles se situent à l'extérieur de celui-ci, réduit la pression au contact des roues jumelées et de la chenille et favorise également la répartition des efforts sur la chenille.

Suivant une autre caractéristique les roues jumelées et une roue centrale ont leur axe dans le même plan transversal vertical. Cette disposition a l'avantage de faciliter la fabrication de modules formés chacun de roues jumelées et d'une roue centrale.

### Dessins

La présente invention sera décrite ci-après de manière plus détaillée à l'aide de modes de réalisation représentés dans les dessins annexés dans lesquels :
- la figure 1 est une vue de côté d'un train de roulement d'un véhicule à chenilles connu,
- la figure 2 est une vue en coupe transversale d'un train de roulement d'un véhicule à chenilles selon l'invention,
- la figure 3 est une vue en coupe partielle d'un autre mode de réalisation de véhicule selon l'invention,
- la figure 4 est une vue de côté schématique d'un train de roulement d'un autre mode de réalisation d'un véhicule selon l'invention.

### Description des modes de réalisation

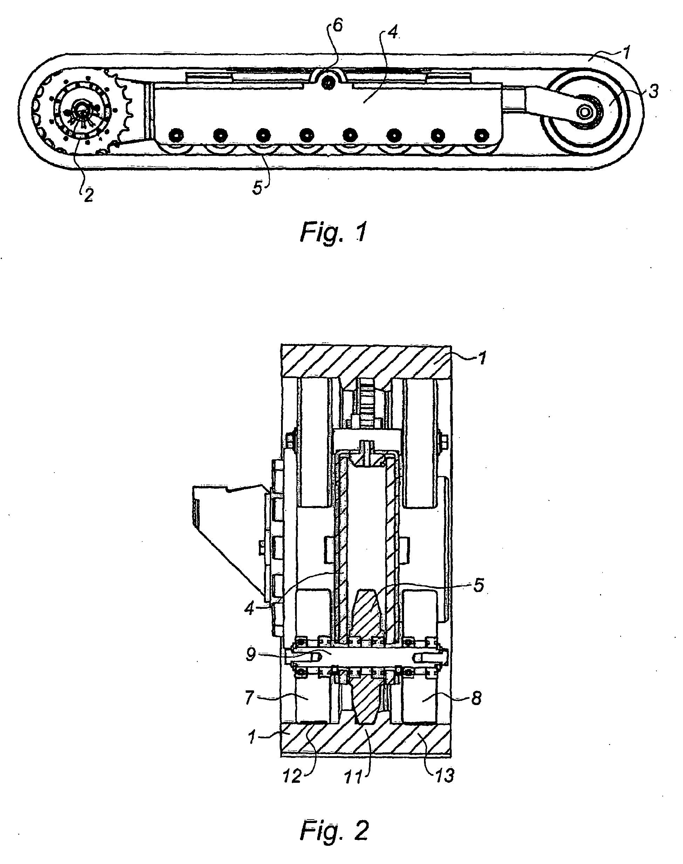

La figure 1 montre le train de roulement d'un véhicule à chenilles auquel est applicable l'invention. Le train de roulement se compose d'une chenille 1 passant sur un barbotin d'entraînement 2 et une roue de tension 3 à l'autre extrémité de la chenille. Dans l'intervalle le train de roulement comporte un caisson 4 portant le barbotin 2 et la roue de tension 3, des roues de roulement 5 ainsi qu'une ou plusieurs roues de support 6 du brin de retour. Le barbotin 2 est une roue dentée qui engrène dans une piste dentée réalisée au milieu de la chenille 1. Les roues de roulement 5 circulent également dans cette piste de même que la ou les roues de support soutenant le brin de retour et la roue de tension.

La vue en coupe de la figure 2 montre un exemple de train de roulement de véhicule à chenilles selon l'invention. Dans ce train de roulement, outre la roue centrale 5 qui est une roue de roulement selon la figure 1, s'appuie dans la piste centrale 11. Deux roues jumelées 7, 8 roulant de part et d'autre 12, 13 de la piste centrale 11 sur la surface intérieure de la chenille 1. Dans cet exemple ces roues jumelées 7, 8 sont montées sur le même axe 9 que la roue centrale 5. Cet axe 9 est porté par le caisson 4 du train de roulement. Les roues jumelées 7, 8 ont dans ce cas un diamètre identique à celui de la roue centrale 5.

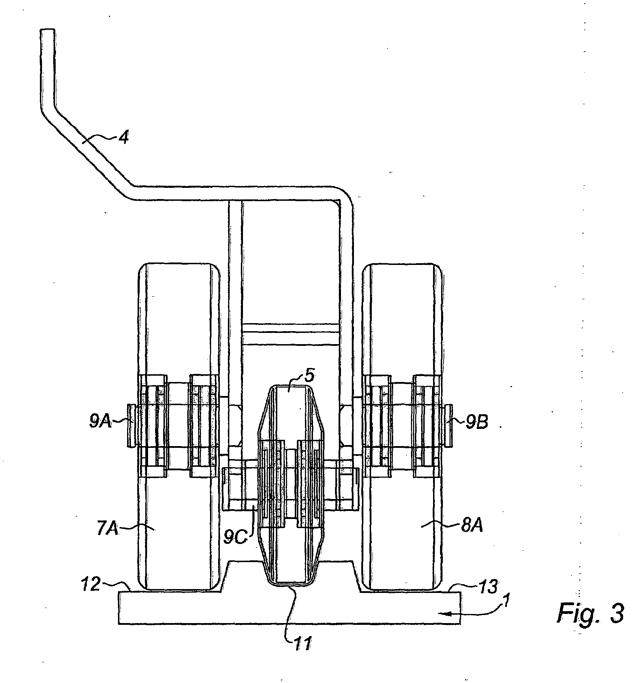

La figure 3 montre une variante de réalisation dans laquelle les roues jumelées 7A, 8A ont un diamètre nettement supérieur à celui de la roue centrale, ce diamètre étant pratiquement double. Ainsi, les roues jumelées ne sont de ce fait pas coaxiales à la roue centrale. Leur axe 9A, 9B est soit situé dans le même plan vertical que celui 9C de la roue centrale 5 soit décalé dans l'intervalle entre deux roues centrales.

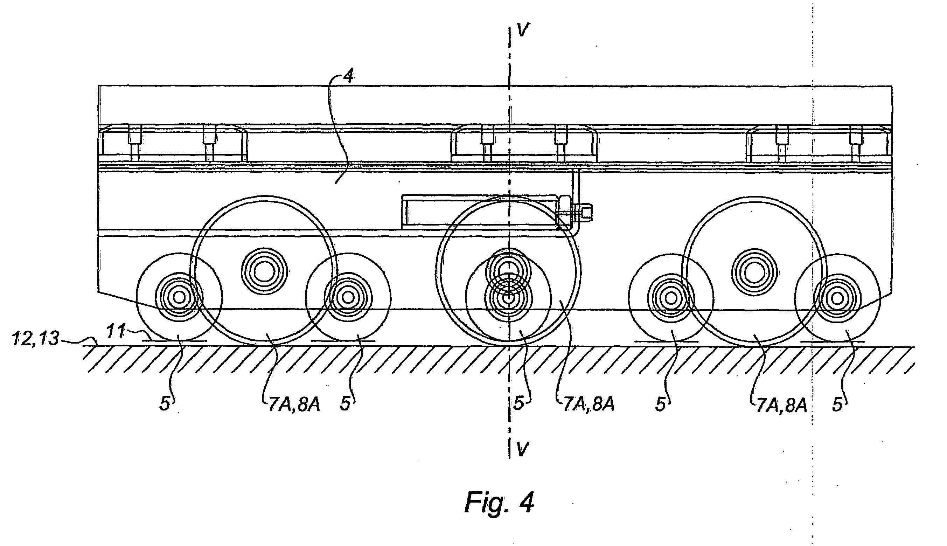

La figure 4 montre différentes dispositions de roues jumelées 7A, 8A par rapport aux roues centrales 5 soit dans l'intervalle des roues centrales 5 soit dans le même plan vertical (VV).

## Revendications

1. Véhicule à chenilles dont le train de roulement est formé d'un caisson équipé d'un barbotin engrenant avec une piste dentée intérieure de la chenille, et de roues de roulement circulant dans le chemin de roulement du barbotin,
**caractérisé en ce que**
le train de roulement est formé au moins partiellement de roues jumelées (7, 8, 7A, 8A) roulant sur la surface intérieure (12, 13) de la chenille (1) de part et d'autre du chemin de roulement (11) du barbotin (2) et des roues de roulement (5).

2. Véhicule à chenilles selon la revendication 1,
**caractérisé en ce que**
les roues jumelées (7, 8) sont coaxiales aux roues (5) circulant dans le chemin de roulement (11) du barbotin (2).

3. Véhicule à chenilles selon la revendication 1,
**caractérisé en ce que**
les roues jumelées (7A, 8A) sont montées de manière décalée par rapport aux roues (5) circulant dans le chemin de roulement (11) du barbotin (2), sur le caisson (4).

4. Véhicula à chenilles selon la revendication 1,
**caractérisé en ce que**
les roues jumelées (7A, 8A) ont un diamètre nettement plus grand que celui des roues centrales (5).

5. Véhicule à chenilles selon la revendication 1,
**caractérisé en ce que**
les roues jumelées (7A, 8A) et une roue centrale ont leur axe (9A, 9B, 9C) dans le même plan transversal vertical (VV).

## Claims

1. Tracked vehicle, the drive train of which is provided in the form of a box-type structure equipped with a sprocket wheel meshing with an interior toothed track of the crawler track, and driving wheels circulating in the driving path of the sprocket wheel,
**characterised in that**
the drive train is formed by at least partially twinned wheels (7, 8, 7A, 8A) circulating on the interior surface (12, 13) of the crawler track (1) on either side of the driving path (11) of the sprocket wheel (2) and driving wheels (5).

2. Tracked vehicle as claimed in claim 1,
**characterised in that**
the twinned wheels (7, 8) are coaxial with the wheels (5) circulating in the driving path (11) of the sprocket wheel (2).

3. Tracked vehicle as claimed in claim 1,
**characterised in that**
the twinned wheels (7A, 8A) are mounted on the box-type structure (4) offset from the wheels (5) circulating in the driving path (11) of the sprocket wheel (2).

4. Tracked vehicle as claimed in claim 1,
**characterised in that**
the twinned wheels (7A, 8A) have a significantly bigger diameter than that of the central wheels (5).

5. Tracked vehicle as claimed in claim 1,
**characterised in that**
the twinned wheels (7A, 8A) and a central wheel are disposed with their axis (9A, 9B, 9C) in the same vertical transverse plane (W).

## Patentansprüche

1. Raupenfahrzeug, dessen Laufwerk von einem Gehäuse gebildet ist, das mit einem Kettenrad, das in eine innere Zahnspur der Raupe eingreift, und mit Laufrädern versehen ist, die auf dem Fahrweg des Kettenrades umlaufen,
**dadurch gekennzeichnet, dass**
das Laufwerk mindestens teilweise von Zwillingsrädern (7, 8, 7A, 8A) gebildet ist, die auf der Innenfläche (12, 13) der Raupe (1) beiderseits des Fahrweges (11) des Kettenrades (2) und der Laufräder (5) laufen.

2. Raupenfahrzeug nach Anspruch 1,
**dadurch gekennzeichnet, dass**
die Zwillingsräder (7, 8) zu den Rädern (5), die auf dem Fahrweg (11) des Kettenrades (2) umlaufen, koaxial sind.

3. Raupenfahrzeug nach Anspruch 1,
**dadurch gekennzeichnet, dass**
die Zwillingsräder (7A, 8A) versetzt zu den Rädern (5), die auf dem Fahrweg (11) des Kettenrades (2) umlaufen, auf dem Gehäuse (4) montiert sind.

4. Raupenfahrzeug nach Anspruch 1,
**dadurch gekennzeichnet, dass**
die Zwillingsräder (7A, 8A) einen deutlich größeren Durchmesser als jener der mittigen Räder (5) haben.

5. Raupenfahrzeug nach Anspruch 1,
**dadurch gekennzeichnet, dass**
die Zwillingsräder (7A, 8A) und ein mittiges Rad ihre Achse (9A, 9B, 9C) in derselben vertikalen Querebene (VV) haben.
